Europäisches Patentamt

European Patent Office

Office européen des brevets

(19)

(11) Publication number: **0 296 556 B1**

(12) **EUROPEAN PATENT SPECIFICATION**

(45) Date of publication of patent specification: **22.04.92**

(51) Int. Cl.5: **B60H 1/00**

(21) Application number: **88109914.7**

(22) Date of filing: **22.06.88**

(54) **Air-conditioning device for motor vehicles.**

(30) Priority: **26.06.87 IT 5348087 U**

(43) Date of publication of application:
**28.12.88 Bulletin 88/52**

(45) Publication of the grant of the patent:
**22.04.92 Bulletin 92/17**

(84) Designated Contracting States:
**DE ES FR IT SE**

(56) References cited:
**DE-A- 2 739 252**
**DE-A- 2 903 643**
**DE-B- 2 504 475**
**FR-A- 2 575 116**
**US-A- 4 452 301**

**PATENT ABSTRACTS OF JAPAN, vol. 5, no. 112 (M-79)[784], 21st July 1981; & JP-A-56 53 911 (DIESEL KIKI K.K.) 13-05-1981**

(73) Proprietor: **BORLETTI CLIMATIZZAZIONE S.r.l.**
**Frazione Masio, 24**
**I-10046 Poirino (Torino)(IT)**

(72) Inventor: **Baro, Sergio**
**Via Montelera, 14/A**
**I-10040 Val Della Torre Torino(IT)**

(74) Representative: **Buzzi, Franco et al**
**c/o Jacobacci-Casetta & Perani S.p.A. Via Alfieri, 17**
**I-10121 Torino(IT)**

Rank Xerox (UK) Business Services

## Description

The present invention relates to an air-conditioning device for motor vehicles, of the type comprising a hollow structure defining ducts provided with choking and closure shutters articulated to the structure for controlling the air flow, at least one of the shutters having rigid portions articulated to each other.

An air-conditioning device of this type is known by DE-B-2504475 and US-A-4452301 in which shutters are disclosed which are provided with two rigid portions articulated to each other, one of these portions being articulated to the structure of the device.

FR-A-2575116 discloses an hollow structure of an air-conditioning device having a gas-tight elongated element between a rotating pin and a rigid baffle. Such element comprises rigid portions connected by film-hinges.

In order to control the flow of air in these devices effectively under various operating conditions (heating, cooling with and without recirculation, etc.), it is necessary to use a considerable number of shutters which enable the air flow to be adapted to the various required configurations and complicated operating mechanisms for the rigid articulated portions.

The object of the present invention is to provide a device of the type specified at the beginning of the description, which does not have the above disadvantages and which is simple and economical to produce.

According to the invention, this object is achieved by virtue of the fact that at least one of the shutters has a flat rigid central portion which is articulated at its opposite parallel edges to flat rigid end portions articulated to the structure about axes substantially parallel to said edges.

One shutter with these characteristics can replace two or more shutters of conventional type. Moreover, the number of control mechanisms is reduced, since only one operating mechanism of one of the rigid end portions may operate all the three rigid portions.

The provision of three or more shutters which are articulated to each other enables air ducts of variable section to be obtained. In this way, it is possible both to optimise the sections of the air passages and to obtain closure thereof, according to the conditions required.

Further advantages and characteristics of the device according to the invention will become clear from the following detailed description, provided purely by way of non-limiting example, with reference to the appended drawings, in which:

Figure 1 is a schematic sectional view of a device according to the invention,

Figure 2 is a view which shows the operation of the device in a first operative configuration,

Figure 3 is a view similar to Figure 2 and shows the operation of the device in a second operative configuration, and

Figure 4 is a view similar to Figures 2 and 3 and shows the operation of the device in a third operative configuration.

With reference to the drawings, an air-conditioning device for motor vehicles is generally indicated 10 and comprises a hollow structure 12 provided with external walls 12a and internal walls 12b and 12c respectively. At the front, the structure 12 has a main shutter 14 articulated at 16 to the structure 12 and adapted to choke or close the external air inlet to the air-conditioning device 10. In the same way, an internal flat shutter 20 is articulated at 18 to the internal wall 12c and has a sealing lip 20a of elastomeric material adapted to abut alternatively against the internal wall 12b or against an appendage P of the external wall 12a of the hollow structure 12 to direct the air flow into a first duct A or into a second by-pass duct B, respectively.

A heat exchanger S is situated in correspondence with the first duct A and an air-circulating fan V is mounted between the internal wall 12b and the external wall 12a of the hollow structure 12.

In the side of the second duct B, the wall 12a has an opening 30 which is in communication with the passenger compartment of the motor vehicle and is adapted to act as an inlet for recirculating air.

An articulated shutter 38, comprising two rigid flat end portions 38a articulated to a rigid flat portion 38b in correspondence with deformable hinges 40 of elastomeric material, is articulated to the internal wall 12b and to the external wall 12a of the hollow structure 12 at 32 and 34 respectively. The deformable hinges 40 are defined by a covering 42 of elastomeric material which covers metal plates 44 forming the central structure of the end portions 38a, the covering 42 extending beyond edges E of these portions. The axes of articulation 32 and 34 of the articulated shutter 38 are substantially perpendicular to the direction of the inlet air flow and are parallel to each other and to the edges E of the end portions 38a of the articulated shutter 38.

In correspondence with the opening 30, the end portion 38a has a sealing lip 46 adapted to cooperate with the external wall 12a of the hollow structure 12 to close the air passage in correspondence with the opening 30.

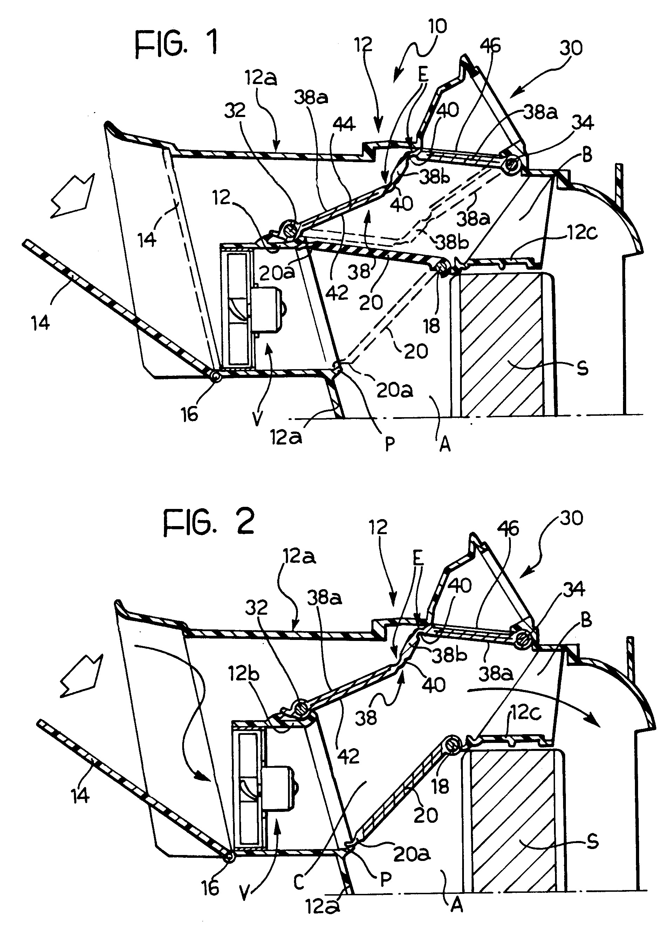

Figure 2 shows the configuration of the device in which the air flow enters through the open main shutter 14, by-passes the heat exchanger S, and is directed into the second duct B by the internal shutter 20. In this configuration, the articulated shutter 38 serves both to close the recirculation opening 30 and to define with the internal shutter 20 an intermediate duct C for passage of the air upstream of the second dutc B.

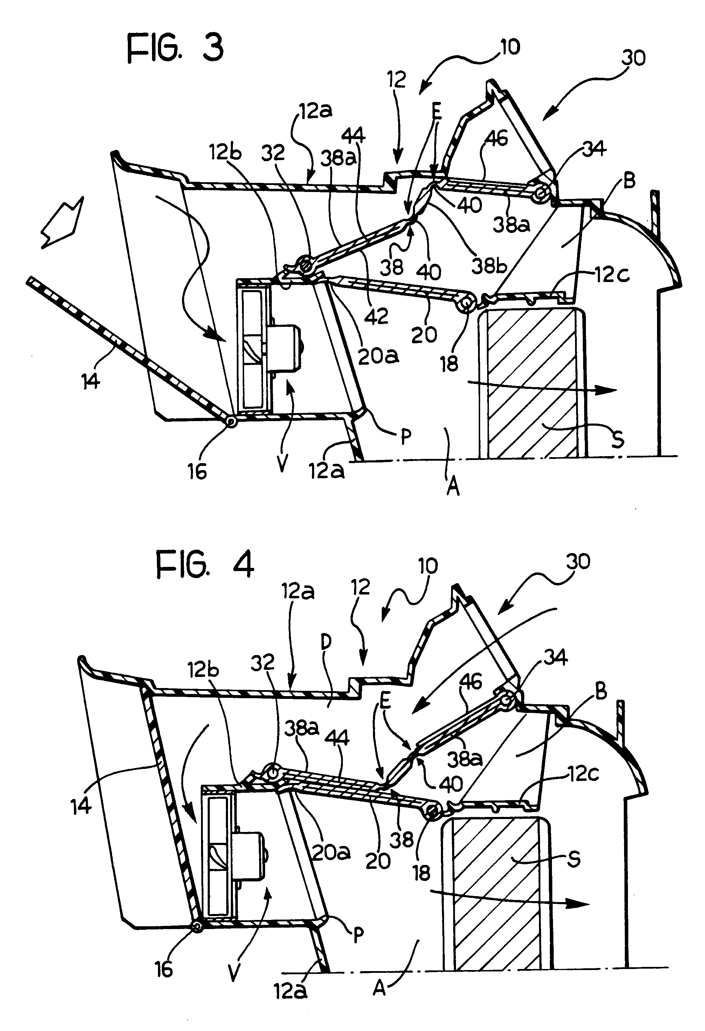

In the configuration illustrated in Figure 3, the articulated shutter 38 is kept in exactly the same position as that shown in Figure 2, the only change being the position of the internal shutter 20, which closes the air inlet to the by-pass duct B and directs the air flow into the first duct A through the heat exchanger S (the heating or cooling configuration, with air taken from the outside).

In the configuration illustrated in Figure 4, the articulated shutter 38 is in its second end position in which, as well as keeping the recirculation opening 30 open, it defines with the external wall 12a of the hollow structure 12 an auxiliary duct D adapted to enable recirculation of the air from the passenger compartment through the heat exchanger S, the main shutter 14 being in the closed configuration. This configuration normally corresponds to the case of cooling by recirculation of the air within the passenger compartment, that is, without air being taken from outside, or to the case of heating with recirculation of the air for defrosting.

It is clear that the articulated shutter 38, operated about a single axis at 32 or 34 by a known operating device (not illustrated), can assume all the possible intermediate configurations between the end ones illustrated in the drawings, so as to enable a gradual variation of the operating parameters of the air-conditioning device. In these intermediate configurations, as well as partial closure of the recirculation opening 30, the passage sections of both the intermediate duct C and the auxiliary duct D are varied gradually.

## Claims

1. An air-conditioning device for motor vehicles, of the type comprising a hollow structure (12) defining ducts (A, B) provided with choking and closure shutters (20, 38) which are articulated to the structure (12) for controlling the air flow, at least one of the shutters (38) having rigid portions (38a, 38b) articulated to each other, characterised in that said shutter (38) has a flat rigid central portion (38b) which is articulated at its opposite parallel edges (E) to flat rigid end portions (38a) articulated to the structure (12) about axes (32, 34) substantially parallel to said edges (E).

2. A device according to Claim 1, characterised in that the rigid end portions (38a) of the shutter (38) each comprise a central rigid plate (44) covered with elastomeric material (42), the covering (42) extending beyond the edges of the plate (44) so as to form deformable hinges (40).

3. A device according to claim 1 or 2, in which the hollow structure (12) defines first and second ducts (A, B) for the passage of air through a heat exchanger (S) and for by-passing the exchanger (S) respectively, the second duct (B) having an opening (30) in communication with the interior of the passenger compartment for conditioning with recirculation of air taken from the passenger compartment, characterised in that the shutter (38) is arranged substantially in correspondence with the second duct (B) and can assume any position between two end positions in which said opening (30) is open or closed.

## Revendications

1. Dispositif de conditionnement d'air pour véhicules à moteur, du type qui comprend une structure creuse (12) définissant des conduits (A, B) munis de volets d'étranglement et de fermeture (20, 38) articulés sur la structure (12) pour commander l'écoulement de l'air, au moins l'un des volets (38) comprenant des parties rigides (38a, 38b) articulées l'une à l'autre, caractérisé en ce que ledit volet (38) comprend une partie centrale rigide plate (38b) qui est articulée le long de ses bords parallèles opposés (E) à des parties d'extrémité rigides plates (38a) articulées sur la structure (12) pour tourner autour d'axes (32, 34) sensiblement parallèles auxdits bords (E).

2. Dispositif selon la revendication 1, caractérisé en ce que les parties d'extrémité rigides (38a) du volet (38) comprennent chacune une plaque rigide centrale (44) revêtue d'une matière élastomère (42) le revêtement (42) se prolongeant au-delà des bords de la plaque (44) de manière à former des charnières déformables (40).

3. Dispositif selon la revendication 1 ou 2, dans lequel la structure creuse (12) définit des premier et deuxième conduits (A, B) servant respectivement à faire passer l'air à travers un échangeur de chaleur (S) ou à lui faire contourner l'échangeur (S), le deuxième conduit (B) possédant une ouverture (30) en communication avec l'intérieur de l'habitacle, pour effectuer le conditionnement avec recyclage de l'air pris dans l'habitacle, caractérisé en ce que le volet (38) est disposé sensiblement au droit du deuxième conduit (B) et peut prendre une position quelconque entre les deux positions extrêmes, dans lesquelles ladite ouverture (30) est ouverte ou fermée.

## Patentansprüche

1.  Eine Klimaanlage für Kraftfahrzeuge der Art, die eine Hohlkonstruktion (12) umfaßt, mit der Kanäle (A, B) abgegrenzt sind, die mit Drossel- und Verschlußblenden (20, 38) versehen sind, wobei diese letzteren gelenkig an der Konstruktion (12) angebracht sind, um den Luftstrom zu regeln und wobei mindestens eine der Blenden (38) starre Teile (38a, 38b) aufweist, die gelenkig miteinander verbunden sind, dadurch gekennzeichnet, daß die genannte Blende (38) einen flachen, starren Mittelteil (38b) hat, der an seinen sich gegenüberliegenden, parallel verlaufenden Kanten (E) gelenkig an flachen, starren Endteilen (38a) angebracht ist, wobei diese Endteile (38a) gelenkig um Achsen (32, 34) an der Konstruktion (12) angebracht sind, die im wesentlichen parallel zu den genannten Kanten (E) verlaufen.

2.  Eine Anlage gemäß Anspruch 1, gekennzeichnet dadurch, daß die starren Endteile (38a) der Blende (38) jeweils eine mittlere starre Platte (44) umfassen, die mit Elastomermaterial (42) beschichtet ist, wobei sich die Beschichtung (42) über die Kanten der Platte (44) hinaus erstreckt, so daß sie verformbare Scharniere (40) bildet.

3.  Eine Anlage gemäß Anspruch 1 oder 2, bei der die Hohlkonstruktion (12) einen ersten und einen zweiten Kanal (A, B) für den Durchgang von Luft durch einen Wärmetauscher (S) beziehungsweise zur Umgehung des Wärmetauschers umfaßt, der zweite Kanal (B) eine Öffnung (30), die mit dem Innern des Fahrgastraumes in Verbindung steht, aufweist, um für eine Klimatisierung durch Umwälzung von Luft zu sorgen, die dem Fahrgastraum entnommen wird, gekennzeichnet dadurch, daß die Blende (38) im wesentlichen in Entsprechung zu dem zweiten Kanal (B) angeordnet ist und jede Stellung zwischen zwei Endstellungen einnehmen kann, in denen die genannte Öffnung (30) offen oder geschlossen ist.

FIG. 1

FIG. 2

# FIG. 3

# FIG. 4